# EUROPÄISCHE PATENTSCHRIFT

(11) **EP 0 475 011 B1**
(45) Veröffentlichungstag und Bekanntmachung des Hinweises auf die Patenterteilung: **18.01.1995**
(21) Anmeldenummer: 91111391.8
(22) Anmeldetag: 09.07.1991
(51) Int. Cl.: H02B 1/28

(54) **Schlagwettergeschütztes Kompaktgehäuse**
Explosion-proof electrical compact-cabinet
Coffret électrique compact antidéflagrant

(30) Priorität: 13.09.1990 DE 9013047 U
(43) Veröffentlichungstag der Anmeldung: 18.03.1992
(73) Patentinhaber: Licentia Patent-Verwaltungs-GmbH, 60596 Frankfurt (DE)
(72) Erfinder: Grimm, Jörn, Dipl.-Ing., W-2302 Flintbek (DE); Kapusta, Andreas, Dipl.-Ing., W-2350 Neumünster (DE)
(74) Vertreter: Vogl, Leo, Dipl.-Ing.

(56) Entgegenhaltungen:
- DE-A- 3 622 812
- DE-A- 3 828 448
- FR-A- 1 255 463
- PATENT ABSTRACTS OF JAPAN, Band 3, Nr. 92, (E-128)[143], 4. August 1979 ; & JP-A-54 71 346

## Beschreibung

Die Erfindung betrifft ein schlagwettergeschütztes Kompaktgehäuse für den Bergbau mit mindestens einem einfahrbaren Gerät, insbesondere einem elektrischen Schaltgerät, wobei das Gerät mittels eines Spindeltriebs mit einer im wesentlichen horizontalen Bewegung in den Schrankraum einfahrbar und geräterückseitig mit schrankseitig vorhandenen Steckkontakten in verschiedenen definierten Positionen (AUS-TEST-EIN) kontaktierbar ist.

Ein derartiges Kompaktgehäuse ist aus der DE-OS 36 22 812 bekanntgeworden. Dort geht es vor allem um das Öffnen bzw. Verriegeln der Gehäusetüre in Abhängigkeit von der Kontaktposition. Der Einfahrvorgang und das Tragorgan sind nicht näher beschrieben, doch werden in diesem Zusammenhang meist am Schaltgerät montierte Rollen verwendet.

Dabei ergibt sich das Problem, daß die Kontaktierung eine exakte Positionierung des Schaltgerätes erforderlich macht. Durch übliche Mittel der Seitenführung ist in der horizontalen Richtung eine genaue Positionierung mit den geräte- und schrankseitig korrespondierenden Kontaktsteckern- und -buchsen leicht zu verwirklichen. Dies gilt aber nicht für die Positionierung in vertikaler Richtung. Insbesondere im Bergbau ist mit einer Verschmutzung der Tragorgane bzw. -schienen zu rechnen, wobei die üblicherweise verwendeten Rollen Schmutzpartikel in Folge des hohen Auflagedruckes noch verdichten bzw. in die Rollbahn einpressen können. Durch solche Vorgänge einschließlich Korrosion kommt es zu einer Veränderung der Rollbahnhöhe und damit zu einer undefinierten vertikalen Anschlußposition des Schaltgerätes.

Der Erfindung liegt die Aufgabe zugrunde, das vorbezeichnete Problem zu lösen und geräte- sowie gehäuseseitig Maßnahmen zu treffen, die ein präzises Einfahren gestatten, das von Verschmutzung und Korrosion weitgehend unabhängig ist.

Diese Aufgabe wird bei einem Kompaktgehäuse der eingangs genannten Art dadurch gelöst, daß das einfahrbare Gerät seitlich zwei Rollenpaare und zwei Gleitschuhpaare aufweist, wobei das frontnahe Gleitschuhpaar seitlich weiter in die Gleitbahn vorspringt als das rückseitige und die Rollenpaare, beide Gleitschuhpaare etwas höher liegen gegenüber den Rollenpaaren, und das hintere Gleitschuhpaar hinter dem hinteren Rollenpaar angeordnet ist, und daß weiterhin die schaltschrankseitige Trägerbahn einen etwas tiefer liegenden Bereich als Rollbahn und einen etwas höher liegenden, endseitig versetzten oder verbreiterten Bereich als Gleitbahn aufweist, wobei die jeweiligen Positionen und Abmessungen derart vorgesehen sind, daß das einzufahrende Schaltgerät zunächst auf seinen Rollen und anschließend in leicht angehobener Position zur genauen vertikalen Kontaktpositionierung auf seinen Gleitschuhen gleitet, wobei die Einfahrbewegung durch einen Spindeltrieb erfolgt, dessen an der Unterseite des Gerätes vorzugsweise mittig angebrachte, schwimmend gelagerte Spindel mit einem schrankseitig angebrachten Gegenstück zusammenwirkt.

Damit wird erreicht, daß gegen Ende des Einfahrvorganges eine definierte Höhenposition des Schaltgerätes erzielt wird, da die Gleitschuhpaare im Gegensatz zu Rollen geeignet sind, etwa auf der Gleitbahn liegenden Schmutz wegzuschieben statt dort anzupressen. Im Falle von Korrosion aber kann die beispielsweise aus verzinktem Stahl gesondert hergestellte Gleitbahn leicht ausgetauscht oder gegebenenfalls in geänderter Dicke neu auf die Trägerbahn eingepaßt werden. Dies ist schon deshalb vorteilhaft, weil derartige Kompaktgehäuse im allgemeinen eine lange Lebensdauer aufweisen, was für übliche Rollbahnen aus vorgesagten Gründen nicht gilt.

Um das einfahrbare Gerät im Übergangsbereich Rollen/Gleiten auf die Höhe der Gleitbahn anheben zu können, ist diese angeschrägt.

Es empfiehlt sich, die geräteseitig vorgesehene Spindel als Hohlspindel mit endseitigem Innengewinde auszubilden und den schrankseitig korrespondierenden Gewindedorn ebenfalls in einer Hülse aufzunehmen, um Verschmutzungen und damit Schwergängigkeit des Spindeltriebes zu vermeiden. Weitere Ausführungsformen sind in weiteren Unteransprüchen gekennzeichnet.

Im folgenden wird die Erfindung anhand eines Ausführungsbeispieles näher erläutert, aus dem sich weitere Vorteile und Merkmale der Erfindung entnehmen lassen. In der zugehörigen Zeichnung zeigt
- Fig. 1: eine Draufsicht auf ein Schaltgerät, das noch nicht voll in das im Schnitt dargestellte Kompaktgehäuse eingefahren ist;
- Fig. 2: die entsprechende Seitenansicht.

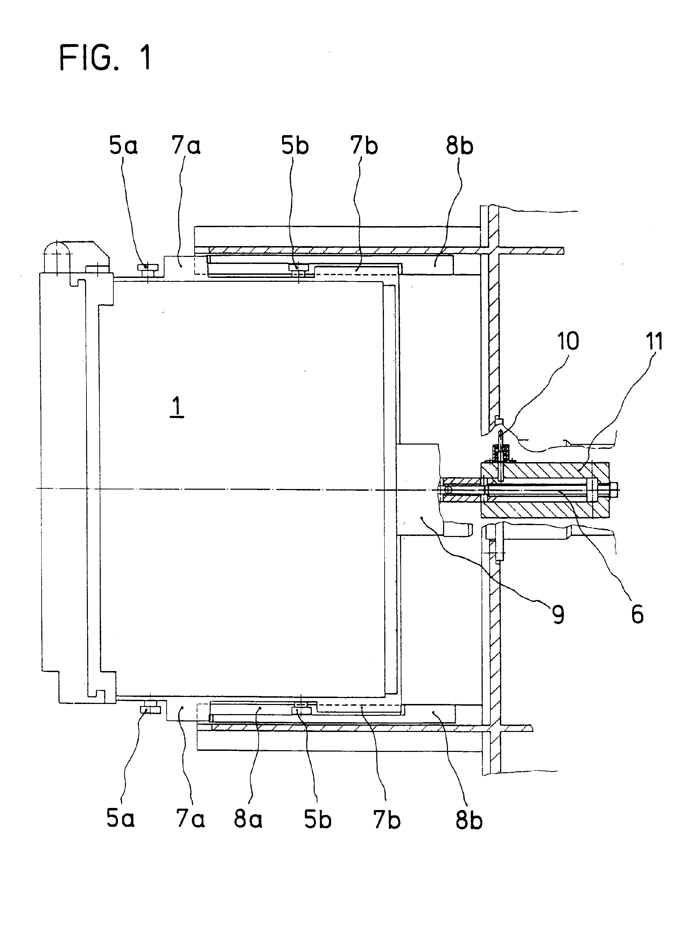

In beiden Figuren verläuft der Weg des Schaltgerätes 1 von links nach rechts in Richtung Betriebsposition. Dabei kommen dann die Kontakte 9a, 9b in verschiedenen definierten Positionen zur Deckung bzw. in Eingriff. Die Position der Rollenpaare 5a, 5b und der zwei Gleitschuhpaare 7a, 7b wird aus Fig. 1 am deutlichsten. Dies gilt auch für ihre zweckmäßige Anordnung in Bezug auf die entsprechend zu gestaltende Rollbahn 8a und die Gleitbahn 8b. Aus beiden Figuren ist ersichtlich, daß sich die Gleitschuhpaare 7a, 7b kurz vor Auflaufen auf die Gleitbahn 8b befinden. Das frontseitige Rollenpaar 5a bewegt sich gegebenenfalls noch auf den (nicht gezeichneten) Vorsatzschienen der Rollbahn 8a.

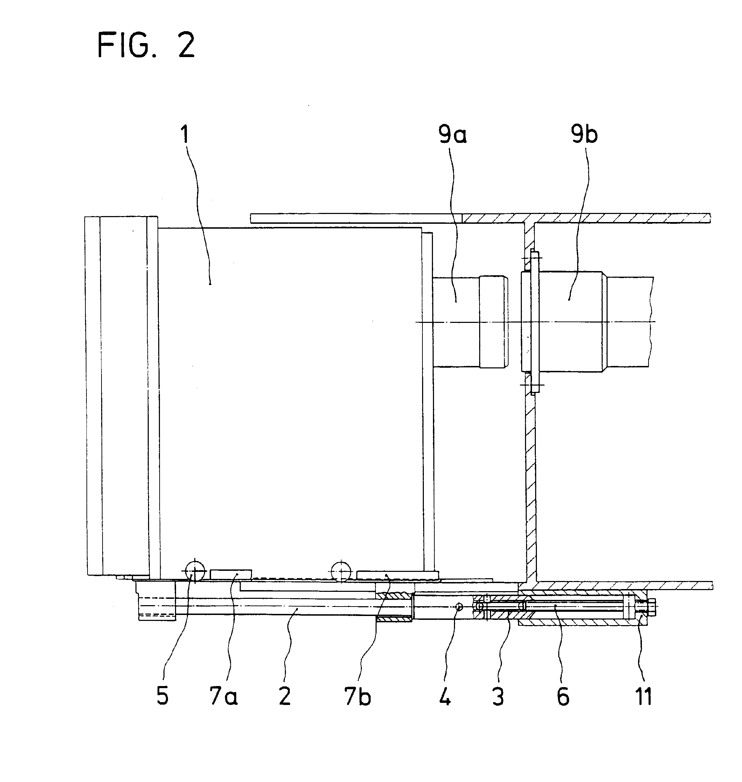

Der Spindeltrieb ist aus Fig. 2 ersichtlich. An der Unterseite des Gerätes 1 ist die Spindel 2 angebracht, die im endseitigen Bereich ein Gewinde 3 aufweist, ausreichend, um die Anschrägung der Gleitschienen und den verhältnismäßig kurzen Weg auf den Gleitbahnen 8b selbst bis zur Endposition kraftschlüssig durchzuführen. Der schrankseitig angebrachte Spindeldorn 6 ist, um Verschmutzungen zu vermeiden, in der Hülse 11 untergebracht.

Die Spindel 2 ist deshalb schwimmend aufgenommen, damit die durch Auffahren von der Rollbahn 8a auf die höhergelegene Gleitbahn 8b gegebene Höhendifferenz ausgeglichen werden kann. Dabei wird das Gerät 1 auf den Rollen 5a, 5b zunächst in eine Position gefahren, in der die Spindel 2 bzw. deren Innengewinde 3 den schrankseitig vorgesehenen Gewindedorn 6 faßt. Dabei ist eine Dimensionierung vorzugsweise in dem Sinne vorgesehen, daß nach etwa drei Spindelumdrehungen das Gerät 1 über die Anschrägung der Gleitschienen 8b auf die genaue Höhenposition gefahren wird. Dabei schnappt ein federbelasteter Arretierstift 10 in die Bohrungen 4 der Hohlspindel 2 zwecks Verriegelung in den Positionen AUS-TEST-EIN. Normalerweise sind also drei Bohrungen 4 in der Spindel 2 vorgesehen. Die Arretierung läßt sich durch manuelles Rückziehen des Stiftes, beispielsweise über einen Bowdenzug wieder aufheben.

## Patentansprüche

1. Schlagwettergeschütztes Kompaktgehäuse für den Bergbau mit mindestens einem einfahrbaren Gerät (1), insbesondere einem elektrischen Schaltgerät, wobei das Gerät mittels eines Spindeltriebs mit einer im wesentlichen horizontalen Bewegung in den Schrankraum einfahrbar und geräterückseitig mit schrankseitig vorhandenen Steckkontakten (9a,9b) in verschiedenen definierten Positionen (AUS-TEST-EIN) kontaktierbar ist, dadurch gekennzeichnet, daß das einfahrbare Gerät (1) seitlich zwei Rollenpaare (5a, 5b) und zwei Gleitschuhpaare (7a, 7b) aufweist, wobei das frontnahe Gleitschuhpaar (7a) seitlich weiter in die Gleitbahn vorspringt als das rückseitige (7b) und die Rollenpaare (5a, 5b), beide Gleitschuhpaare (7a, 7b) etwas höher liegen gegenüber den Rollenpaaren (5a, 5b), und das hintere Gleitschuhpaar (7b) hinter dem hinteren Rollenpaar (5b) angeordnet ist, und daß weiterhin die schaltschrankseitige Trägerbahn einen etwas tiefer liegenden Bereich als Rollbahn (8a) und einen etwas höher liegenden, endseitig versetzten oder verbreiterten Bereich als Gleitbahn (8b) aufweist, wobei die jeweiligen Positionen und Abmessungen derart vorgesehen sind, daß das einzufahrende Schaltgerät zunächst auf seinen Rollen (5a, 5b) und anschließend in leicht angehobener Position zur genauen vertikalen Kontaktpositionierung auf seinen Gleitschuhen (7a, 7b) gleitet, wobei die Einfahrbewegung durch einen Spindeltrieb erfolgt, dessen an der Unterseite des Gerätes (1) vorzugsweise mittig angebrachte, schwimmend gelagerte Spindel (2) mit einem schrankseitig angebrachten Gegenstück (6) zusammenwirkt.

2. Kompaktgehäuse nach Anspruch 1, dadurch gekennzeichnet, daß die Gleitbahn (8b) im Übergangsbereich Rollen/Gleiten angeschrägt ist.

3. Kompaktgehäuse nach Anspruch 1 oder 2, dadurch gekennzeichnet, daß die geräteseitig vorhandene Spindel eine Hohlspindel (2) mit endseitigem Innengewinde (3) ist, welche schrankseitig mit einem Gewindedorn (6) zusammenwirkt.

4. Kompaktgehäuse nach Anspruch 3, dadurch gekennzeichnet, daß der Gewindedorn (6) in einer Hülse (11) aufgenommen ist.

5. Kompaktgehäuse nach einem der vorangehenden Ansprüche, dadurch gekennzeichnet, daß die Hülse (11) eine Bohrung aufweist, zur Aufnahme eines federbelasteten Arretierstiftes (10), der in Bohrungen (4) der Hohlspindel (2) zwecks Verriegelung in verschiedenen definierten Positionen einrastet.

6. Kompaktgehäuse nach einem der vorangehenden Ansprüche, gekennzeichnet durch frontseitig am Schaltschrank zum Aufsetzen des Gerätes (1) anbringbare Vorsatzschienen als Verlängerung der Rollbahn (8a).

## Claims

1. Compact housing, protected against explosive atmosphere, for mining, comprising at least one apparatus (1) which can be run in, particularly on electrical switchgear, wherein the apparatus is movable into the cabinet chamber by a substantially horizontal movement by means of a spindle drive and is contactable at the apparatus rear side by plug contacts (9a, 9b), which are present at the cabinet, in various defined positions (OFF-TEST-ON), characterised thereby that the run-in apparatus (1) has at the sides two roller pairs (5a, 5b) and two slide shoe pairs (7a, 7b), wherein the slide shoe pair (7a) near the front projects laterally further into the slide track than the rear side pair (7b) and the roller pairs (5a, 5b), both slide shoe pairs (7a, 7b) lie somewhat higher compared with the roller pairs (5a, 5b), and the back slide shoe pair (7b) is arranged behind the back roller pair (5b), and that further the support track at the switch cabinet has a region lying somewhat deeper than the roller track (8a) and a region offset at the end, enlarged or lying somewhat higher than the slide track (8b), wherein the respective positions and dimensions are provided in the manner that the switchgear to be run in slides initially on its rollers (5a, 5b) and subsequently in slightly elevated position on its slide shoes (7a, 7b) to the exact vertical contact positioning, wherein the run-in movement is effected by a spindle drive, the spindle (2) of which, which is floatingly mounted and situated preferably centrally at the underside of the apparatus (1), co-operates with a counter member (6) situated at the cabinet.

2. Compact housing according to claim 1, characterised thereby that the slide track (8b) is bevelled in the transition region between rollers and slides.

3. Compact housing according to claim 1 or 2, characterised thereby that the spindle present at the apparatus is a hollow spindle (2) with an internal thread (3) at the end, which cooperates at the cabinet with a threaded pin (6).

4. Compact housing according to claim 3, characterised thereby that the threaded pin (6) is received in a sleeve (11).

5. Compact housing according to one of the preceding claims, characterised thereby that the sleeve (11) has a bore for reception of a spring-loaded locking pin, which detents in bores (4) of the hollow spindle (2) for the purpose of arresting in different defined positions.

6. Compact housing according to one of the preceding claims, characterised by attachment rails, which are mountable at the front of the switch cabinet as an extension of the roller track (8a), for placing on of the apparatus (1).

## Revendications

1. Coffret électrique compact antidéfragrant pour l'industrie minière avec au moins un appareil mobile (1), en particulier un appareil électrique de commande, l'appareil étant introduit au moyen d'un entraînement à broche en effectuant un déplacement sensiblement horizontal dans l'espace de l'armoire et étant amené en contact dans différentes positions (ARRET-TEST-MARCHE) sur la face arrière de l'appareil avec des contacts à fiche (9a, 9b) se trouvant dans une face d'armoire, caractérisé en ce que l'appareil mobile (1) présente sur le côté deux paires de roulettes (5a, 5b) et deux paires de patins (7a, 7b), la paire de patins (7a) la plus avancée dépassant latéralement plus loin dans la voie de coulisse que le patin arrière (7b) et les paires de roulettes (5a, 5b), les deux paires de patins (7a, 7b) étant situées un peu plus haut par rapport aux paires de roulettes (5a, 5b), et la paire de patins arrière (7b) étant disposée derrière la paire de roulettes arrière (5b), et en ce qu'en outre la voie porteuse, se trouvant du côté de l'armoire de commande, présente une zone plus basse servant de voie de roulement (8a) et une zone plus haute décalée ou élargie à l'extrémité en tant que voie de coulisse (8b), les positions et dimensions respectives étant prévues de sorte que l'appareil de commande à entrer glisse tout d'abord sur ses roulettes (5a, 5b) et ensuite en position légèrement soulevée sur ses patins (7a, 7b) pour se mettre exactement en position verticale de contact, le mouvement d'entrée s'effectuant par un entraînement à broche dont la broche (2), mise en place de manière flottante et, ce, de préférence au milieu de la face inférieure de l'appareil (1), coopère avec un pendant (6) logé côté armoire.

2. Coffret électrique selon la revendication 1, caractérisé en ce que la voie de coulisse (8b) est biseautée dans la zone de transition du roulement au coulissement.

3. Coffret électrique selon la revendication 1 ou 2, caractérisé en ce que la broche se trouvant côté appareil est une broche creuse (2) présentant, à l'extrémité, un taraudage (3) qui coopère côté armoire avec un filet (6).

4. Coffret électrique selon la revendication 3, caractérisé en ce que le filet (6) est logé dans une douille (11).

5. Coffret électrique selon l'une des revendications précédentes, caractérisé en ce que la douille (11) présente un alésage pour le logement d'une cheville d'arrêt (10), chargée par ressort, laquelle s'encliquète dans des alésages (4) de la broche creuse (2) pour le verrouillage dans différentes positions définies.

6. Coffret électrique selon l'une des revendications précédentes, caractérisé par des rails additionnels pour le prolongement de la voie de roulement (8a) qui peuvent être installés à l'avant de l'armoire de commande afin de recevoir l'appareil (1).
